# EUROPÄISCHE PATENTSCHRIFT

(11) **EP 0 929 930 B1**
(45) Veröffentlichungstag und Bekanntmachung des Hinweises auf die Patenterteilung: **26.04.2000**
(21) Anmeldenummer: 97909164.2
(22) Anmeldetag: 19.09.1997
(51) Int. Cl.: H02M 1/12, H02M 3/335

(54) **GETAKTETE STROMVERSORGUNG VON SCHALTNETZTEILEN**
SWITCHED-MODE POWER SUPPLY
ALIMENTATION ELECTRIQUE A DECOUPAGE

(30) Priorität: 07.10.1996 DE 19641299
(43) Veröffentlichungstag der Anmeldung: 21.07.1999
(73) Patentinhaber: SIEMENS AKTIENGESELLSCHAFT, 80333 München (DE)
(72) Erfinder: HERFURTH, Michael, D-82205 Gilching (DE)
(86) Internationale Anmeldenummer: DE9702130
(87) Internationale Veröffentlichungsnummer: WO9816002

(56) Entgegenhaltungen:
- EP-A- 0 650 249
- US-A- 5 440 473
- SPIAZZI G ET AL: "POWER FACTOR PREREGULATORS WITH IMPROVED DYNAMIC RESPONSE" RECORD OF THE ANNUAL POWER ELECTRONICS SPECIALISTS CONFERENCE (PESC, ATLANTA, JUNE 12 - 15, 1995, Bd. 1, 12.Juni 1995, INSTITUTE OF ELECTRICAL AND ELECTRONICS ENGINEERS, Seiten 150-156, XP000548400

## Beschreibung

Die Erfindung betrifft eine getaktete Stromversorgung von Schaltnetzteilen, insbesondere von Schaltnetzteilen mit Stand-by-Betrieb, mit den folgenden Merkmalen:
a) mit einem Hauptwandler für die galvanische Trennung des primären und sekundären Stromkreises sowie für die Transformation der Spannungen des Primärkreises und Sekundärkreises,
b) mit einem getakteten zweiten Wandler,
c) mit einer ersten Regelschleife für die Zwischenkreisspannung, wobei die erste Regelschleife dem zweiten Wandler zugeordnet ist,
d) mit einem dem zweiten Wandler nachgeschalteten ersten Ausgangskreis.

Moderne elektronische Geräte wie zum Beispiel PC-, Fax- oder TV-Geräte weisen heute üblicherweise eine Stand-by- oder Bereitschaftsfunktion auf. Bei einem TV-Gerät im Stand-by-Zustand ist ist das Gerät "ausgeschaltet" und kann beispielsweise über eine Fernbedienung wieder in den Nennbetrieb geschaltet werden. Bei einem Fax-Gerät ist das Gerät in Empfangsbereitschaft und wird beispielsweise durch ein ankommendes Faxsignal eingeschaltet. Die unterschiedlichen Gerätezustände Stand-by-Betrieb oder Gerätebetrieb benötigen daher häufig gesonderte Anforderungen an die Stromversorgung des Schaltnetzteiles. Im Stand-by-Betrieb soll die Stromaufnahme möglichst gering sein. Insbesondere sollen dabei nur solche Gerätefunktionen versorgt werden, die für eine schnelle Einsatzbereitschaft notwendig sind und die für die Erkennung eines Startsignals wie zum Beispiel das Infrarotsignal einer Fernbedienung oder das Empfangssignal eines Faxmodems erforderlich sind.

Unter Berücksichtigung eines möglichst hohen Wirkungsgrades für die Betriebszustände eines Gerätes, wird die Stromversorgung heute üblicherweise realisiert mit einer Hauptstromversorgung für die Nominal-/Maximal-Last und einer zusätzlichen Hilfsstromversorgung für die Minimal-Last, wie sie beispielsweise im Stand-by-Betrieb eines PC-Gerätes erforderlich ist.

Aus technologisch/wirtschaftlichen Erwägungen und zur Erfüllung anstehender nationaler und internationaler Normen und Regelungen enthalten die Hauptstromversorgungen zukünftig neben dem bekannten PWM-Wandler (Pulsweitenmodulation; DC/DC-Wandler) für die Hauptstromversorgung des Gerätes häufig einen weiteren sogenannten PFC-Wandler. Der PFC-Wandler (Power-Factor-Correction; AC/DC-Wandler) dient der vorgeschriebenen Verbesserung des Leistungsfaktors, während der klassische PWM-Wandler die Transformation und Netztrennung vornimmt. Der Leistungsfaktor ist definiert als das Verhältnis zwischen aufgenommener Wirkleistung und aufgenommener Scheinleistung. Idealerweise ist der Leistungsfaktor gleich eins. In diesem Fall gibt es keine Blindleistung. Typischerweise sind PFC-Wandler aus Kostengründen und aufgrund ihres hohen Wirkungsgrades als Hochsetzsteller ausgeführt. Alternativ kann der PFC-Wandler beispielsweise auch als Sperrwandler ausgeführt sein.

Es wäre nun vorteilhaft bei ausgeschaltetem Gerät bzw. PWM-Wandlerteil den PFC-Wandler als Stromversorgung für im Stand-by-Betrieb einzusetzen und damit eine separate Hilfsstromversorgung einzusparen. In der Praxis scheiterte diese auf den ersten Blick triviale Nutzung des PFC-Wandlers daran, daß die Regelschleife für die Ausgangsspannung des PFC-Wandlers prinzipbedingt dynamisch langsam ausgelegt werden muß, um Modulationen des aufgenommenen Netzstromes durch die Regelung gering zu halten. Dies führt in zahlreichen Betriebszuständen wie zum Beispiel beim Hochlauf der Stromversorgung oder bei Lastsprüngen zu längeren Pausen im getakteten Betrieb, wodurch der Energiefluß für die Nutzung als Hilfsstromversorgung unterbrochen wird. Eine Überbrückung der Tastpausen, zum Beispiel durch größere Speicherkondensatoren, scheitert daran, daß in bestimmten Betriebszuständen die Betriebsdauer zur Nachladung nicht ausreicht.

Eine gattungsgemäße Stromversorgung eines Schaltnetzteiles ist beispielsweise aus "Power-Factor-Controller TDA 4815/19 verbessert Leistungsfaktor von Schaltnetzteilen" von Werner Schott, in der Brochure Siemens Components 31 (1993), Heft 2, Seiten 46 bis 50 angegeben. Hier ist insbesondere in Bild 2 ein Schaltnetzteil mit einem als Hochsetzsteller (PFC-Wandler) ausgeführten aktivem Oberschwingungsfilter und Durchflußwandler (PWM-Wandler) angegeben.

Weitere gattungsgemäße integrierte Schaltungen sind beispielsweise aus den Datenblättern zum Baustein TK 84 819 der Firma Toko, zum Baustein LT 1509 der Firma Linear Technology und zum Baustein ML 4824 der Firma Micro Linear beschrieben.

Der Erfindung liegt die Aufgabe zugrunde, eine getaktete Stromversorgung für Schaltnetzteile der eingangsgenannten Art anzugeben, bei der auf eine separate Hilfstromversorgung, insbesondere für den Stand-by-Betrieb, verzichtet werden kann.

Diese Aufgabe wird durch den kennzeichnenden Teil des Anspruchs 1 gelöst. Es ist hier eine zweite Regelschleife für die Zwischenkreisspannung vorgesehen, die dem zweiten Wandler zugeordnet ist und die der ersten Regelschleife mindestens zeitweise aktivierbar überlagert ist oder die erste Regelschleife mindestens zeitweise vollständig ersetzt, wobei die Regelzeitkonstante der ersten Regelschleife größer ist als die Regelzeitkonstante der zweiten Regelschleife.

Wesentlicher Bestandteil der Erfindung ist die Einführung einer zweiten Regelschleife für die Zwischenspannung. Diese zweite Regelschleife ist dem Leistungswandler überlagert. Der Leistungswandler ist vorteilhafterweise ein Wandler mit Power-Factor Correction (PFC-Wandler). Der Leistungswandler ist als aktives Oberschwingungsfilter ausgeführt, das eine sinusförmige Stromaufnahme sowie eine Weitbereichtransformation zuläßt. Die zweite Regelschleife regelt dynamisch sehr viel schneller als die prinzipbedingt dynamisch langsame erste Regelschleife des PFC-Wandlers. Der Leistungswandler kann bei Bedarf aktiviert werden und die erste Stromversorgung teilweise überlagern oder ganz ersetzen. Im Stand-by-Betrieb erfolgt die Stromversorgung durch den Leistungswandler selbst ohne Verwendung einer separaten Hilfsstromversorgung.

In einer Ausgestaltung ist der Leistungswandler typischerweise als Hochsetzsteller ausgeführt. Alternativ ist auch denkbar, das Wandlerteil durch einen anderen Leistungswandler wie zum Beispiel einen Sperrwandler, einen Hoch/Tiefsetzsteller oder ähnlichem zu ersetzen. Allerdings sind Hochsetzsteller aufgrund ihres höheren Wirkungsgrades bzw. aus Kostengründen als Leistungswandler vorzuziehen.

In einer Weiterbildung ist im Ausgangskreis des PFC-Wandlers ein weiterer Ausgangskreis mit kurzer Verzögerungszeit parallel geschaltet. Dadurch kann der Energiefluß schneller erfaßt werden.

In einer Ausgestaltungen wird an der Drosselspule über mindestens eine weitere Wicklung jeweils eine weitere Wicklungsspannung abgegriffen. Jede diese Wicklungsspannungen wird jeweils einer Gleichrichterschaltung zugeführt. An den jeweiligen Ausgängen der Gleichrichterschaltungen liegt jeweils eine separate Ausgangsspannung an.

In einer vorteilhaften Weiterbildung kann diese Gleichrichterschaltung als Brückengleichrichter oder als Ladungspumpe ausgebildet sein.

In einer Ausgestaltung wird mindestens eine Ausgangsspannung der Gleichrichterschaltungen als primärseitige Versorgungsspannung verwendet. Diese primärseitige Versorgungsspannung kann beispielsweise die Systemsteuerung der integrierten Schaltung ansteuern. Eine weitere Ausgangsspannung kann als sekundärseitige Versorgungsspannung verwendet werden. Diese Versorgungsspannungen können beispielsweise für die sekundärseitige Stromversorgung von Gerätefunktionen, insbesondere für den Stand-by-Betrieb, vorgesehen sein.

Mit der erfindungsgemäßen Anordnung ist es vorteilhafterweise möglich, auch bei völliger Entlastung des PFC-Wandlers an seinem Hauptausgang den getakteten Betrieb zur Versorgung weiterer Verbraucher, wie beispielsweise die Stand-by-Gerätefunktion bzw. die Systemsteuerung, aufrecht zu erhalten, ohne daß die Spannung am Hauptausgang unzulässig ansteigt oder daß die Taktpausen zu groß werden.

Die Erfindung wird nachfolgend anhand der in den Figuren der Zeichnung dargestellten Ausführungsbeispiele näher erläutert. Es zeigt:
- Figur 1: ein Blockschaltbild einer bekannten Stromversorgungseinheit mit integrierter Steuerschaltung zur Stromsteuerung,
- Figur 2: das Blockschaltbild einer erfindungsgemäßen Stromsteuerungseinheit mit integrierter Steuerschaltung, die zusätzlich eine zweite dynamisch schnelle Regelschleife sowie einen zweiten Ausgangskreis für die Zwischenspannung aufweist.
- Figur 3: das Schaltbild für eine Gleichrichterschaltung zur Bereitstellung einer separaten Versorgungsspannung, die als Brückengleichrichter (a) bzw als Ladungspumpe (b) ausgeführt ist.

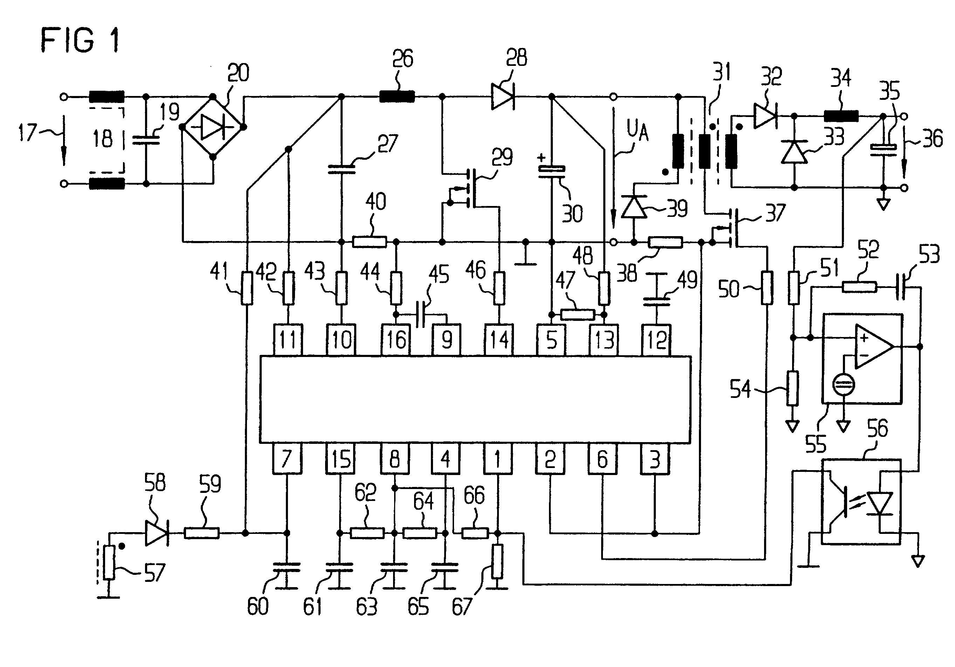

Figur 1 zeigt das Blockschaltbild einer bekannten getakteten Stromversorgung für ein Schaltnetzteil mit PFC-Leistungswandler.

Das Schaltnetzteil mit PFC-Wandler gemäß Figur 1 ist in bekannter Weise aufgebaut und weist einen Eingang 17 mit nachgeschalteter Drossel 18, Kondensator 19 und Gleichrichter 20 auf. Der positive Pol des Gleichrichters 20 ist über eine Induktivität 26 und eine Diode 28 in Reihe mit einem Übertrager 31 verschaltet. Der negative Pol des Gleichrichters 20 ist über einen Widerstand 40 und einer Diode 39 in Reihe mit einer Wicklung des Übertragers 31 und über den Widerstand 38 und einen MOSFET 37 mit einer zweiten Wicklung des Übertragers 31 verbunden. Zwischen dem positiven und negativen Ausgang des Gleichrichters 20 ist eine Kapazität 27 geschaltet, sowie nach der Induktivität 26 ein zweiter MOSFET 29 parallel zum Bezugspotential der Schaltung. Zwischen den Knotenpunkten der Reihenschaltung aus Diode 28 und Übertrager 31 und Bezugsmasse ist eine weitere Kapazität 30 geschaltet, an der die Zwischenkreisspannung UA anliegt.

Der Ausgangskreis des Schaltnetzteils besteht aus den beiden Dioden 32 und 33 sowie der nachgeschalteten Spule 34 und dem Kondensator 35, die in bekannter Weise verschaltet sind. An den Klemmen 36 kann die Ausgangsspannung des Schaltnetzteils abgegriffen werden.

Die integrierte Steuerschaltung IC weist Anschlüsse 1 bis 16 auf, die über jeweilige Widerstände 41 bis 44, 46 bis 48, 50 sowie die Bauelemente 45, 49 und 57 bis 67 mit dem Schaltnetzteil über die in Figur 1 dargestellten Leitungen verbunden sind.

Die Elemente 51 bis 56 bilden einen Rückkopplungszweig mit dem Optokoppler 56. Die Elemente 57 - 59 bilden eine Hilfsstromversorgung für die integrierte Schaltung IC. Die Wicklung 57 kann beispielsweise am Übertrager 31 oder an der Drosselspule 26 angebracht sein. Diese Hilfsstromversorgung wird in die integrierte Schaltung IC an der Klemme 7 eingekoppelt. Dabei wird die Kapazität 60 aufgeladen und bei einem Übersteigen einer Grenzspannung, die typischerweise bei 50 V liegt, wird die Kapazität 60 entladen und versorgt die integrierte Schaltung IC.

Die Schaltung gemäß Figur 1 ist als Stromsteuerung ausgelegt. Durch unterschiedliche Beschaltung der Anschlüsse 1 und 3 kann durch die Schaltung entsprechend Figur 1 auch eine Spannungssteuerung erfolgen.

Die Klemmen der Steuerschaltung der integrierten Schaltung IC können wie folgt belegt sein. An der Klemme 1 ist die PWM-Steuerspannung anlegbar, welche normalerweise über den Optokoppler 56 bereitgestellt wird. Klemme 2 dient der PWM-Strombegrenzung. Klemme 3 ist der PWM-Stromfühlereingang, der im Strommodus üblicherweise einen Eingangsbereich von 0 bis 1,5 V hat und im Spannungsmodus typischerweise einen Bereich von 0 bis 6 V. An Klemme 4 wird eine externe Kapazität mit dem Oszillator verbunden. Anschlußklemme 5 ist der Masseanschluß. Anschlußklemme 6 ist der Ausgang des PWM-Gatetreiber. Klemme 7 ist der Anschluß für die Versorgungsspannung. An Klemme 8 ist eine interne Referenzspannung abgreifbar, die über die Widerstände 62, 64, 66 den Klemmen 1, 4, 15 zugeführt wird. Klemme 9 ist ein Ausgang für Kompensation des PFC-Stroms. Anschlußklemmen 10 und 11 bilden sind mit dem Ausgang eines Multiplizierers verbunden. Anschluß 10 ist zusätzlich auch mit dem nichtinvertierenden Eingang eines Fehlerverstärker verbunden. Klemme 12 ist der Ausgang für einen PVC-Stromschleifenfehlerverstärker für die Spannungskompensation sowie mit dem Sicherheitskomparator für fehlende Last verbunden. Klemme 13 ist der invertierende Eingang eines BUS-Spannungsfehlerverstärker, der einen PFC-Überspannungskomparator sowie PWM-Überspannungskomparatoren enthält. An Klemme 14 kann der Gateanschluß des PFC-Treibertransistors angeschlossen werden. An Klemme 15 entsteht bei Beschaltung mit einem Kondensator gegen Masse und einem Widerstand nach Klemme 8 eine Rampenspannung zur Bildung des Tastverhältnisses für den PFC-Wandlerteil. Klemme 16 bildet den invertierenden Eingang des PFC-Fehlerstromverstärkers zur Kompensation.

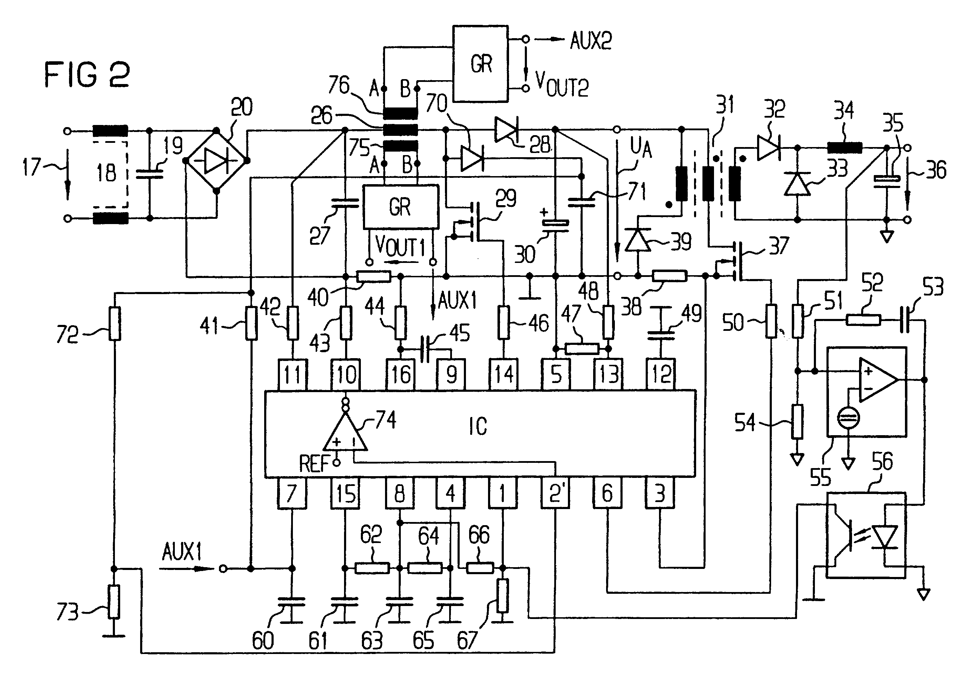

Figur 2 zeigt das Blockschaltbild der erfindungsgemäßen getakteten Stromversorgung eines Schaltnetzteiles, die zusätzlich einen zweiten dynamischen schnellen Regelkreis sowie einen zweiten Ausgangskreis aufweist. Gleiche Elemente sind entsprechend Figur 1 mit gleichem Bezugszeichen versehen.

Die getaktete Stromversorgung des Schaltnetzteil in Figur 2 enthält im wesentlichen die Elemente des Schaltnetzteiles aus Figur 1. Der Leistungswandler wird hier durch ein PFC-Wandlerteil gebildet. Der PFC-Wandler in Figur 2 ist durch den Hochsetzsteller ausgebildet. Der Hochsetzsteller besteht im Beispiel von Figur 2 aus der Drosselspule 26, der Diode 28 sowie den Kpazitäten 27 und 30 und dem MOSFET 29. Die Kapazität 30 ist typischerweise als Elektrolytkondensator mit verhältnismäßig großer Kapazität ausgeführt. Es wäre auch denkbar, das PFC-Wandlerteil durch einen anderen Leistungswandler wie zum Beispiel einen Sperrwandler, einen Hoch/Tiefsetzsteller oder ähnlichem zu bilden. Aus Kostengründen bzw. aufgrund seines höheren Wirkungsgrades ist allerdings der Hochsetzsteller als Leistungswandler vorzuziehen.

Dem ersten Ausgangskreis für die Zwischenkreisspannung bestehend aus der Diode 28 und der Kapazität 30 ist ein zweiter Ausgangskreis bestehend aus der Diode 70, einer Kapazität 71 und einem Widerstand 41 parallel geschaltet. Die Kapazität 71 ist sehr viel niedriger als die Kapazität des Elektrolytkondensators 30. Typische Werte sind für die Kapazität 30 100 µF und für die Kapazität 101 100 nF. Aufgrund dessen ist die Verzögerungszeit des zweiten Ausgangskreises mit den obigen Zahlenwerten um Faktoren kürzer als die Verzögerungszeit des ersten Ausgangskreises. Der Widerstand 41 weist einen verhältnismäßig großen Widerstandswert von typischerweise etwa 200KΩ auf und dient vornehmlich zur Strombegrenzung.

Der dem als Übertrager 31 ausgebildeten Hauptwandler vorgeschalteter getakteter PFC-Wandler enthält eine erste Regelschleife für die Zwischenspannung. Diese erste Regelschleife, welche an der Klemme 12 der integrierten Schaltung IC ein Regelsignal bereitstellt, ist prinzipbedingt dynamisch langsam ausgelegt. Erfindungsgemäß ist dem PFC-Wandler eine weitere Regelschleife überlagert. Diese zweite Regelschleife weist dynamisch eine schnelle Reaktionszeit auf. Die zweite Regelschleife wird dabei mit dem Ausgangskreis gebildet, der die kürzere Verzögerung aufweist. Am Fußpunkt des Spannungsteilers bestehend aus den Widerstandselementen 72, 73 wird ein Signal abgegriffen und der Klemme 2' der integrierten Schaltung IC zugeführt. Die Klemme 2' unterscheidet sich damit von Klemme 2 aus Figur 1. In der integrierten Schaltung IC wird das Signal von der Klemme 2' dem invertierenden Eingang eines OTAs 74 (Operational Transconductance Amplifier) zugeführt. Der positive Eingang des OTAs 74 ist mit der Referenzspannung REF verbunden. Ausgangsseitig steuert der OTA 74 die Klemme 10 an. An der Klemme 10 ist dann ein zweites dynamisch schnelles Regelsignal abgreifbar.

Die Regelzeitkonstanten der ersten und zweiten Regelschleife werden im wesentlichen von den Kapazitäten 30, 71 und 49 bestimmt. Typische Werte für die Regelzeitkonstanten sind 100 msec für die ersten Regelschleife und 1 msec für die zweite schnelle Regelschleife.

Die Drosselspule 26 des PFC-Wandlers in Figur 2 weist eine weitere Wicklung 75 auf. Die beiden Enden der Wicklung 75 sind mit den Klemmen A, B verbunden, an denn die Wicklungsspannung abfällt. Die an den Klemmen A, B abfallende Wicklungsspannung wird einer Gleichrichterschaltung GR zugeführt. Ausgangsseitig an der Gleichrichterschaltung GR wird eine erste separate Versorgungsspannung V_{OUT1} und ein Stromsignal AUX1 bereitgestellt. Das Stromsignal AUX1 wird in die Klemme 7 eingespeist und dient der primärseitigen Hilfsstromversorgung, insbesondere für die integrierte Schaltung IC. Aufgrund dessen entfallen die Elemente der Hilfsstromversorgung 57 - 59 aus Figur 1.

Zusätzlich weist die Drosselspule 26 des PFC-Wandlers in Figur 2 eine dritte Wicklung 76 auf. Die beiden Enden der Wicklung 76 sind über die Klemmen C, D verbunden, an denn die Wicklungsspannung abfällt, mit einer weiteren Gleichrichterschaltung GR verbunden. Ausgangsseitig an der Gleichrichterschaltung GR wird eine zweite separate Versorgungsspannung V_{OUT2} mit dem Stromsignal AUX2 bereitgestellt. Das Stromsignal AUX2 wird in die Klemme 7 als Hilfsstromversorgung eingespeist. Dieses Stromsignal dient der sekundärseitigen Hilfsstromversorgung. Insbesondere werden hier für Gerätefunktionen wie zum Beispiel der Stromversorgung für den Stand-by-Betrieb versorgt.

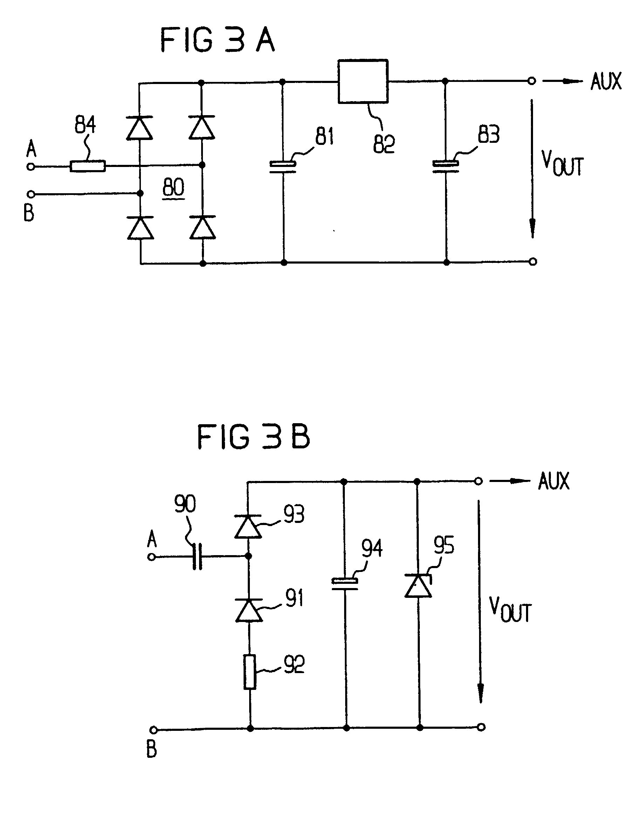

Figur 3 zeigt zwei Schaltbilder für die Gleichrichterschaltung GR zur Bereitstellung einer separaten Versorgungsspannung V_{OUT}.

In Figur 3 a) ist die Gleichrichterschaltung GR mit einem Brückengleichrichter 80 der bekannten Art ausgeführt, dessen Eingänge mit den Klemmen A, B verbunden sind. Zwischen positivem und negativem Ausgang der Brückenschaltung sind zwei Kapazitäten 81, 83 parallel geschaltet. Die Kapazitäten 81, 83 dienen als Zwischenspeicherelement und sind vorteilhafterweise als Elektrolykondensatoren ausgeführt. Elektrolytkondensatoren sind aufgrund ihrer hohen Leistungsfähigkeit vorteilhaft, da sie hohe Lastströme auffangen können. Zwischen den Kapazitäten 81, 83 ist außerdem ein Längsregler 82, der als analoger Spannungsregler ausgeführt ist, geschaltet. An den Ausgangsklemmen liegt die separate Versorgungsspannung V_{OUT} an sowie der Ausgangsstrom AUX an. Zur Begrenzung des Ladestromes kann als Strombegrenzungselement ein Widerstand 84 dem Brückengleichrichter 80 vorgeschaltet sein.

In Figur 3 b) ist die Gleichrichterschaltung GR als Ladungspumpe ausgeführt. Die Ladungspumpe besteht aus einem Entladestromkreis und einem Ladestromkreis. Der Entladestromkreis enthält eine erste Kapazität 90, ein Strombegrenzungselement 92 und eine erste Diode 91 in Reihe. Das Strombegrenzungselement 92 ist typischerweise ein Widerstand. Zu Beginn einer Taktperiode wird die erste Kapazität 90 entladen beziehungsweise mit negativer Polarität geladen. Über das Strombegrenzungselement 92 wird dabei der Ladestromes begrenzt. Der Ladestromkreis enthält die erste Kapazität 90, eine zweite Diode 93 und eine zweite Kapazität 94 in Reihe, sowie ein der zweiten Kapazität 94 parallelgeschaltetes Spannungsbegrenzungselement 95. Das Spannungsbegrenzungselement 95 ist typischerweise eine Zenerdiode, die zweite Kapazität 94 ist üblicherweise als Elektrolytkondensator ausgeführt. Bei einem Spannungsanstieg nach dem Ausschalten des Leistungsschalters wird die erste Kapazität 90 über die zweite Diode 93 zur Trennung des Strompfades mit positiver Polarität geladen. Der Ladestromkreis wird über die zweite Kapazität 94 als Speicherelement für die separate Versorgungsspannung geleitet. Das Strombegrenzungselement kann auch in Reihe mit der ersten Kapazität 90 geschaltet sein. Diese Variante ist allerdings verlustreicher.

Die in Figur 2 gezeigten Gleichrichterschaltungen GR für die Bereitstellung einer primärseitigen und sekundärseitigen Versorgungsspannung V_{OUT1}, V_{OUT2} können aber müssen nicht notwendigerweise identisch sein.

Über weitere Wicklungen an der Drosselspule 26 und weitere Gleichrichterschaltungen GR können weitere separate Versorgungsspannungen für zusätzliche Gerätefunktionen bereitgestellt werden.

Zusätzlich kann der oben erwähnten ersten und zweiten Spannungsregelschleife in bekannter Weise eine dritte Regelung für den aufgenommenen Strom unterlagert sein. Zweckmäßigerweise besitzt dieser Stromregler ein modifiziertes Integralverhalten, wodurch eine Unterdrückung des hochfrequenten Rippelstromes bzw. eine Mittelwertbildung auch bei nicht kontinuierlichem Drosselstrom erfolgt. In der Reglerstruktur ist hier zwischen der ersten langsamen Regelschleife und dem Stromregler ein Multiplizierer eingefügt, womit dem Sollwert für den Strom die Kurvenform der Eingangsspannung aufgezwungen wird. Auf diese Weise ergibt sich für den aufgenommenen Netzstrom auch für den Teillastbereich eine optimale Kurvenform, die auch dann erhalten bleibt, wenn der Scheitelwert der Eingangsspannung an die Ausgangsspannung heranreicht. Außerdem läßt sich im Betrieb mit einer unterlagerten Stromregelung eine Funkentstörung leichter erzielen.

## Patentansprüche

1. Getaktete Stromversorgung eines Schaltnetzteiles, insbesondere eines Schaltnetzteiles mit Stand-by-Betrieb,
a) mit einem Hauptwandler (31-35, 37, 39) für die galvanische Trennung des primären und sekundären Stromkreises sowie für die Transformation der Spannungen des Primärkreises und Sekundärkreises,
b) mit einem getakteten zweiten Wandler (26-30),
c) mit einer ersten Regelschleife für die Zwischenkreisspannung, die gleich der Ausgangsspannung des zweiten Wandlers (26-30) ist und wobei die erste Regelschleife dem zweiten Wandler (26-30) zugeordnet ist,
d) mit einem dem zweiten Wandler (26-30) nachgeschalteten ersten Ausgangskreis (28, 30), der Teil des zweiten Wandlers (26-30) ist,
**dadurch gekennzeichnet**, daß
e) eine zweite Regelschleife mit einem zweiten Ausgangskreis (41, 70, 71) für die Zwischenkreisspannung vorgesehen ist, die dem zweiten Wandler (26-30) zugeordnet ist und die der ersten Regelschleife mindestens zeitweise aktivierbar überlagert ist oder die erste Regelschleife mindestens zeitweise vollständig ersetzt, wobei die Regelzeitkonstante der ersten Regelschleife größer ist als die Regelzeitkonstante der zweiten Regelschleife.

2. Getaktete Stromversorgung nach Anspruch 1,
**dadurch gekennzeichnet,**
daß der zweite Wandler (26-30) ein aktives Oberschwingungsfilter ist.

3. Getaktete Stromversorgung nach einem der vorhergehenden Ansprüche,
**dadurch gekennzeichnet,**
daß der zweite Wandler (26-30) ein Hochsetzsteller ist.

4. Getaktete Stromversorgung nach einem der Ansprüche 1 oder 3,
**dadurch gekennzeichnet,**
daß dem ersten Ausgangskreis (28, 30) des zweiten Wandlers (26-30) der zweite Ausgangskreis (41, 70, 71) enthaltend ein lineares Element (41) und ein Speicherelement (71) parallel angeordnet ist, wobei die Verzögerungszeit des zweiten Ausgangskreises (41, 70, 71) kürzer ist als die Verzögerungszeit des ersten Ausgangs kreises, wobei die zweite Regelschleife mit dem Ausgangskreis gebildet wird, der die kürzeste Verzögerungszeit aufweist.

5. Getaktete Stromversorgung nach einem der Ansprüche 1 bis 4,
**dadurch gekennzeichnet**,
daß die Drosselspule (26) des zweiten Wandlers (26-30) mindestens eine weitere Wicklung (75, 76) aufweist, an der jeweils eine Wicklungsspannung abgreifbar ist, die über jeweils eine Gleichrichterschaltung (GR) jeweils eine separate Versorgungsspannung (V_{OUT1}, V_{OUT2}) bereitstellt.

6. Getaktete Stromversorgung nach Anspruch 5,
**dadurch gekennzeichnet**,
daß die Gleichrichterschaltung (GR) einen Brückengleichrichter (80) enthält.

7. Getaktete Stromversorgung nach Anspruch 5,
**dadurch gekennzeichnet,**
daß die Gleichrichterschaltung (GR) eine Ladungspumpe enthält.

8. Getaktete Stromversorgung nach einem der Ansprüche 1 bis 4,
**dadurch gekennzeichnet**,
daß mindestens eine der Versorgungsspannungen (V_{OUT1}) primärseitig zur Systemsteuerung einer integrierten Schaltung (IC) vorgesehen ist.

9. Getaktete Stromversorgung nach einem der Ansprüche 1 bis 4,
**dadurch gekennzeichnet,**
daß mindestens eine weitere der Versorgungsspannungen (V_{OUT2}) sekundärseitig für die Stromversorgung von Gerätefunktionen, insbesondere im Stand-by-Betrieb, vorgesehen ist.

## Claims

1. Pulsed power supply of a switched-mode power supply, in particular of a switched-mode power supply with stand-by operation,
a) having a main converter (31-35, 37, 39) for the electrical isolation of the primary and secondary circuits, as well as for transforming the voltages of the primary circuit and secondary circuit,
b) having a pulsed second converter (26-30),
c) having a first closed-loop control circuit for the intermediate circuit voltage, which is equal to the output voltage of the second converter (26-30) and the first closed-loop control circuit being assigned to the second converter (26-30),
d) having a first output circuit (28, 30) which is connected downstream of the second converter (26-30) and is part of the second converter (26-30),
characterized in that
e) a second closed-loop control circuit having a second output circuit (41, 70, 71) for the intermediate circuit voltage is provided, which is assigned to the second converter (26-30) and which is superimposed on the first closed-loop control circuit such that it can be activated at least temporarily or completely replaces the first closed-loop control circuit at least temporarily, the control time constant of the first closed-loop control circuit being greater than the control time constant of the second closed-loop control circuit.

2. Pulsed power supply according to Claim 1, characterized in that the second converter (26-30) is an active harmonic filter.

3. Pulsed power supply according to one of the preceding claims, characterized in that the second converter (26-30) is a step-up converter.

4. Pulsed power supply according to one of Claims 1 or 3, characterized in that the second output circuit (41, 70, 71) containing a linear element (41) and a storage element (71) is arranged in parallel with the first output circuit (28, 30) from the second converter (26-30), the delay time of the second output circuit (41, 70, 71) being shorter than the delay time of the first output circuit, the second closed-loop control circuit being formed with the output circuit which has the shortest delay time.

5. Pulsed power supply according to one of Claims 1 to 4, characterized in that the inductor (26) of the second converter (26-30) has at least one further winding (75, 76) at which it is respectively possible to tap a winding voltage which respectively provides a separate supply voltage (V_{OUT1}, V_{OUT2}) via rectifier circuits (GR) in each case.

6. Pulsed power supply according to Claim 5, characterized in that the rectifier circuit (GR) contains a bridge rectifier (80).

7. Pulsed power supply according to Claim 5, characterized in that the bridge rectifier (GR) contains a charging pump.

8. Pulsed power supply according to one of Claims 1 to 4, characterized in that at least one of the supply voltages (V_{OUT1}) is provided on the primary side for the system control of an integrated circuit (IC).

9. Pulsed power supply according to one of Claims 1 to 4, characterized in that at least one further one of the supply voltages (V_{OUT2}) is provided on the secondary side for the power supply of equipment functions, in particular in stand-by operation.

## Revendications

1. Alimentation à découpage, notamment pour un fonctionnement en Stand-by, comportant
a) un convertisseur principal (31 à 35, 37, 39) pour la séparation galvanique du circuit de courant primaire et du circuit de courant secondaire ainsi que pour la transformation des tensions du circuit primaire et du circuit secondaire,
b) un deuxième convertisseur à découpage (26 à 30),
c) une première boucle de régulation pour la tension de circuit intermédiaire qui est égale à la tension de sortie du deuxième convertisseur (26 à 30), la première boucle de régulation étant associée au deuxième convertisseur (26 à 30),
d) un premier circuit de sortie (28, 30) branché du côté aval du deuxième convertisseur (26 à 30) et faisant partie du deuxième convertisseur (26 à 30),
caractérisée par le fait que
e) il est prévu une deuxième boucle de régulation qui comporte un deuxième circuit de sortie (41, 70, 71), qui est destinée à la tension de circuit intermédiaire, qui est associée au deuxième convertisseur (26 à 30) et qui est superposée à la première boucle de régulation au moins temporairement de manière activable ou qui remplace complètement la première boucle de régulation au moins temporairement, la constante de temps de régulation de la première boucle de régulation étant plus grande que la constante de temps de la deuxième boucle de régulation.

2. Alimentation à découpage selon la revendication 1,
caractérisée par le fait que le deuxième convertisseur (26 à 30) est un filtre d'harmoniques actif.

3. Alimentation à découpage selon l'une des revendications précédentes,
caractérisée par le fait que le deuxième convertisseur (26 à 30) est un élévateur de tension.

4. Alimentation à découpage selon l'une des revendications 1 ou 3,
caractérisée par le fait que le deuxième circuit de sortie (41, 70, 71) contenant un élément linéaire (41) et un élément de stockage (71) est monté en parallèle avec le premier circuit de sortie (28, 30) du deuxième convertisseur (26 à 30), le retard du deuxième circuit de sortie (41, 70, 71) étant plus court que le retard du premier circuit de sortie et la deuxième boucle de régulation étant formée avec le circuit de sortie qui a le plus court retard.

5. Alimentation à découpage selon l'une des revendications 1 à 4,
caractérisée par le fait que la bobine de self (26) du deuxième convertisseur (26 à 30) comporte au moins un autre enroulement (75, 76) auquel peut être prélevé une tension d'enroulement qui fournit par l'intermédiaire d'un circuit redresseur (GR) une tension d'alimentation séparée (V_{OUT1}, V_{OUT2}).

6. Alimentation à découpage selon la revendication 5,
caractérisée par le fait que le circuit redresseur (GR) contient un redresseur à pont (80).

7. Alimentation à découpage selon la revendication 5,
caractérisée par le fait que le circuit redresseur (GR) contient une pompe de charge.

8. Alimentation à découpage selon l'une des revendications 1 à 4,
caractérisée par le fait qu'il est prévu au moins l'une des tensions d'alimentation (V_{OUT1}) côté primaire pour la commande de système d'un circuit intégré (IC).

9. Alimentation à découpage selon l'une des revendications 1 à 4,
caractérisée par le fait qu'il est prévu au moins une autre tension d'alimentation (V_{OUT2}) côté secondaire pour l'alimentation en courant de fonctions d'appareil, notamment lors du fonctionnement en Stand-by.
